# EUROPEAN PATENT SPECIFICATION

(11) **EP 3 112 825 B1**
(45) Date of publication and mention of the grant of the patent: **20.02.2019**
(21) Application number: 15855886.6
(22) Date of filing: 17.06.2015
(51) Int. Cl.: G01G 19/387, G01G 19/393

(54) **COMBINATION WEIGHING APPARATUS**
KOMBINATIONSWÄGEVORRICHTUNG
APPAREIL DE PESAGE DE COMBINAISON

(30) Priority: 31.10.2014 JP 2014005794 U
(43) Date of publication of application: 04.01.2017
(73) Proprietor: Ishida Co., Ltd., Kyoto-shi, Kyoto 606-8392 (JP)
(72) Inventor: ETO, Takao, Ritto-shi Shiga 520-3026 (JP)
(74) Representative: Lang, Johannes
(86) International application number: PCT/JP2015/067511
(87) International publication number: WO 2016/067673

(56) References cited:
- EP-A2- 2 116 823
- JP-A- 2009 276 157
- JP-B2- 2 502 950
- JP-B2- 5 106 125
- US-A1- 2010 018 782
- US-A1- 2013 186 696

## Description

### Technical Field

The present disclosure relates to a combination weighing device that conveys an object supplied to a trough by rotating a screw member arranged in the trough.

### Background Art

JP 2008-537099W discloses a weighing device. The weighing device includes a motor-driven transporting screw. The transporting screw is formed as a spiral rod. The transporting screw adequately conveys the objects from a delivery unit to a weighing system even if a product is unsuitable for vibration conveyance. Further weighing devices are disclosed in JP 2009 276157 A, EP 2 116 823 A2, US 2013/186696 A1 and US 2010/018782 A1.

The transporting screw and a motor are coupled to each other by a spring and a ball. Therefore, the transporting screw can easily be exchanged from the motor.

Document WO 2006/092148 A1 discloses a weighing arrangement comprising an infeed for product material to be weighed and at least one dosing mechanism for controlled conveying of product material portions from said infeed to a weighing system.

Document JP 2502950 B2 discloses a combined weight measuring method and apparatus. It discloses to provide a spiral body in a first cylindrical body which feeds a to-be-measured object supplied from a second cylindrical body in a transverse direction. The spiral body discharges the object a little at a time to a measuring unit while forming the object into a lump. A gap is formed between the first cylindrical body and the measuring unit into which the object supplied little by little falls.

### Summary of Invention

### Technical Problem

However, the weighing device disclosed in Patent Literature 1 includes a coupling mechanism with the spring and the ball between the transporting screw and the motor. Therefore, during the exchange, it is always necessary for a user to reach for and put user's hand in a neighborhood of a coupling portion of the transporting screw and the motor.

In a general weighing device, the coupling portion of the transporting screw and the motor is frequently located near a central portion of a weighing device main body as illustrated in Fig. 3 of Patent Literature 1. In consideration of actual operation to exchange the transporting screw, it is necessary for the user to perform the operation to reach the user's hand and the operation to put the user' s hand in the coupling portion of the transporting screw and the motor. For this reason, convenience for the user and hygiene are not so good.

It is also conceivable that the coupling mechanism with the spring and the ball is arranged outside the coupling portion of the transporting screw and the motor. However, in this case, a physical distance between the coupling portion of the transporting screw and the motor and the coupling mechanism increases actually. As a result, a space where components are arranged is enlarged in of the weighing device main body, which results in cost increase and enlargement of the weighing device due to the increased number of components.

The present disclosure provides a combination weighing device in which both the convenience and the hygiene can be improved from the user's viewpoint of exchanging a screw member.

### Solution to Problem

In accordance with one aspect of the present disclosure, a combination weighing device includes : a main body; a plurality of weighing units; troughs that extend radially in directions of the plurality of weighing units from a center of a main body in a planar view; a screw unit that is spiral member which is arranged in the trough to convey an object in the trough toward the weighing unit, the screw unit rotating in the trough to convey the object; and a rotation driving member that rotates the screw unit, wherein one of the screw unit and the rotation driving member includes a projection that rotates about a rotation axis fixed in a direction in which the screw unit is attached at an end, and the other includes a grooved cam in which the projection is fitted and slides at an end, and after the projection is fitted in the grooved cam, the projection slides on the grooved cam by a rotation of the screw unit to attach the screw unit to the rotation driving member.

### Advantageous Effects of Invention

In a combination weighing device of the present disclosure, both the convenience and the hygiene can be improved from the user's viewpoint of exchanging a screw member.

### Brief Description of Drawings

Fig. 1 is a schematic perspective view illustrating a combination weighing device 1 according to an embodiment.
Fig. 2 is a schematic perspective view illustrating a distribution table 10 and a conveying unit 20 of the combination weighing device in Fig. 1.
Fig. 3 is a partially sectional view illustrating the conveying unit 20 of the combination weighing device 1 in Fig. 1 when the conveying unit 20 is laterally viewed.
Fig. 4 is a schematic plan view illustrating the combination weighing device 1 in Fig. 1 when the combination weighing device 1 is viewed from above.
Fig. 5 is a schematic diagram illustrating a structure of a screw unit 30 of the embodiment.
Fig. 6 is a view illustrating a frame 90 to which the screw unit 30 is attached and an opening 1001, a rotation driving member 1002, and a projection 1003 that are provided in the frame 90.
Figs. 7(a) and 7(b) are views for explaining a structure of an outer diameter member 32 according to a modification.
Fig. 8 is a view for explaining a structure of an opening 1001 according to the modification.

### Description of Embodiments

Hereinafter, an embodiment will be described in detail with reference to the drawings. However, the detailed description beyond necessity is occasionally omitted. For example, the detailed description of a well-known item or the overlapping description of the substantially identical configuration is occasionally omitted. This is because unnecessary redundancy of the following description is avoided to facilitate understanding of those skilled in the art.

The inventor provides the accompanying drawings and the following description in order that those skilled in the art sufficiently understand the present disclosure, but does not intend to limit a subject matter described in a scope of claims of the utility model registration by the accompanying drawings and the following description.

### Embodiment

An embodiment will be described below with reference to Figs . 1 to 8.

### (1-1; Outline of whole operation)

A combination weighing device 1 according to the embodiment will be described below with reference to the drawings.

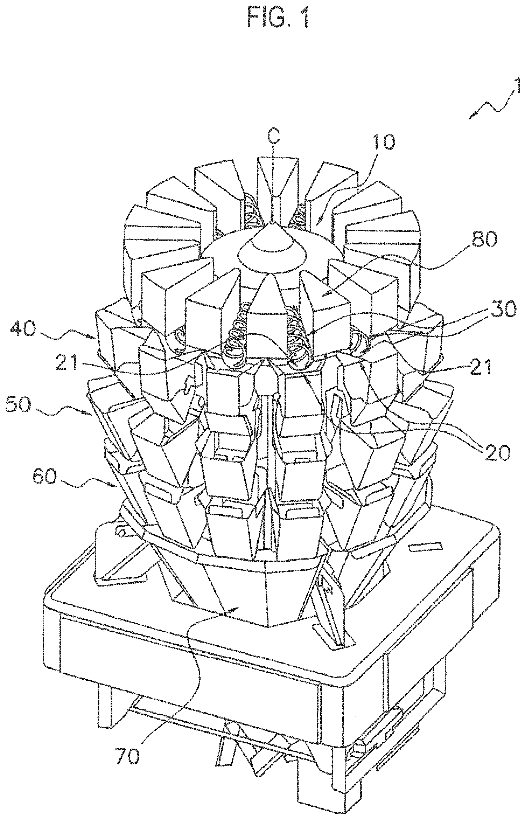

Fig. 1 is a schematic perspective view illustrating the combination weighing device 1 of the embodiment.

The combination weighing device 1 in Fig. 1 includes a distribution table 10, conveying units 20, screw units 30, pool hoppers 40, weighing hoppers 50, booster hoppers 60, and collective discharge chutes 70, and guide blocks 80.

At first an outline of operation of the combination weighing device 1 will be described.

An object is conveyed to the combination weighing device 1 by a cross feeder (not illustrated) arranged in an upper portion of the combination weighing device 1. At this point, the object is soft and sticky food such as raw chicken meat. However, the object is not limited to the soft and sticky food, but any food may be conveyed as long as the food is hardly conveyed by usual vibration conveyance.

The object conveyed by the cross feeder is supplied to a substantially central portion of the distribution table 10. The distribution table 10 is driven to be rotated about a vertically extending rotation axis C (see Fig. 1). The distribution table 10 conveys the object supplied from above toward an outside in a radial direction while distributing the object in a circumferential direction. The object, which is distributed and conveyed by the distribution table 10, is discharged from an outer periphery of the distribution table 10.

The object discharged from the distribution table 10 is supplied to the plural conveying units 20 circularly arranged below the distribution table 10. The plural conveying units 20 extend radially from the center of the distribution table 10. In other words, the plural conveying units 20 extend radially from the center of the combination weighing device 1. At this point, the guide block 80 is arranged between the conveying units 20 adjacent to each other. Action of the guide block 80 prevents the object from dropping between the conveying units 20. Each conveying unit 20 conveys the object supplied from the distribution table 10 toward the pool hopper 40 that is arranged around the distribution table 10 while corresponding to the conveying unit 20 on a one-on-one basis. Specifically, in each conveying unit 20, the screw unit 30 arranged in a trough 21 is rotated to move the object in the trough 21. Each conveying unit 20 drops the conveyed object in the pool hopper 40 arranged in a lower portion of an outer end portion of the conveying unit 20 (a lower portion of an outer end portion of the trough 21), thereby supplying the object to the pool hopper 40.

Each pool hopper 40 temporarily holds the object supplied from the conveying unit 20. Then, the pool hopper 40 supplies the held object to the corresponding weighing hopper 50 that is arranged below the pool hopper 40 on a one-on-one basis . Each weighing hopper 50 weighs a weight of the object using a weighing mechanism (not illustrated). The object discharged from the weighing hopper 50 is accommodated and temporarily held by the corresponding booster hopper 60 that is arranged below the weighing hopper 50 on a one-on-one basis.

Based on the weights of the objects in the weighing hopper 50 and the booster hopper 60, a controller (not illustrated) of the combination weighing device 1 calculates and obtains a combination of the hoppers that are matched with or closest to a target weight among combinations of permissive weights through calculation. The object in the hopper included in the combination calculated and obtained by the controller is discharged to the collective discharge chute 70. The object discharged to the collective discharge chute 70 is supplied to a downstream process (not illustrated).

### (1-2; Description of each component constituting combination weighing device 1)

The distribution table 10, the conveying unit 20, the pool hopper 40, the weighing hopper 50, and the booster hopper 60 of the combination weighing device 1 will be described below with reference to the drawings.

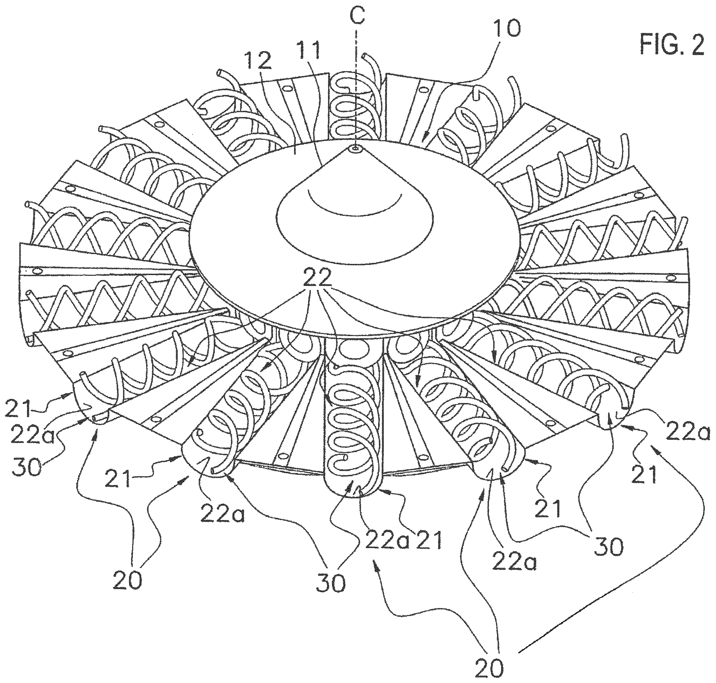

Fig. 2 is a schematic perspective view illustrating the distribution table 10 of the combination weighing device 1 and the conveying unit 20 of the combination weighing device 1 in Fig. 1. Fig. 2 illustrates a state in which the guide block 80 is detached.

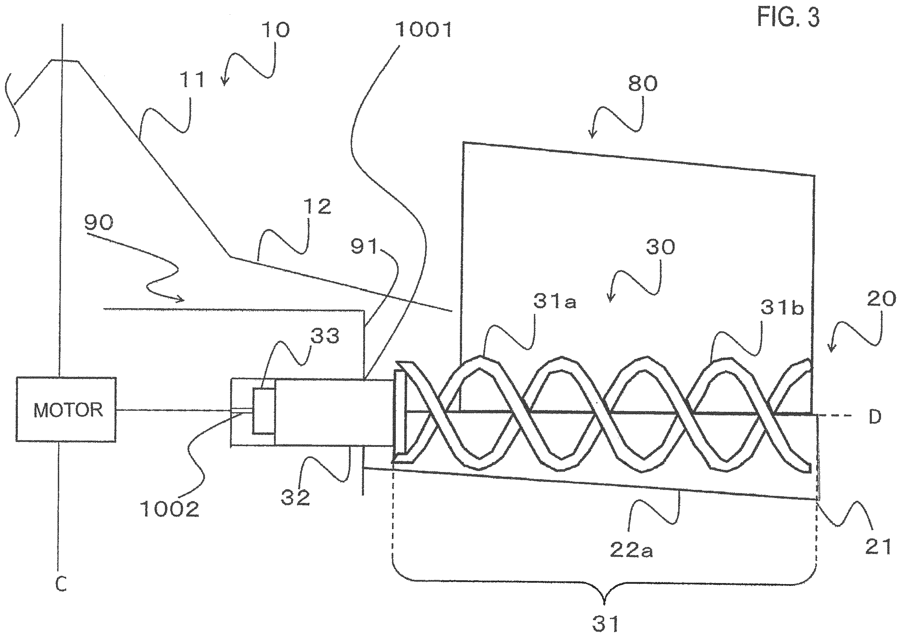

Fig. 3 is a partially sectional view illustrating the distribution table 10 of the combination weighing device 1 and the conveying unit 20 of the combination weighing device 1 in Fig. 1 when the distribution table 10 and the conveying unit 20 are laterally viewed. In Fig. 3, a front side in the drawing of a concave groove 22 of the trough 21 in the conveying unit 20 is omitted. A section of a holder of the screw unit 30 in the conveying unit 20 is illustrated.

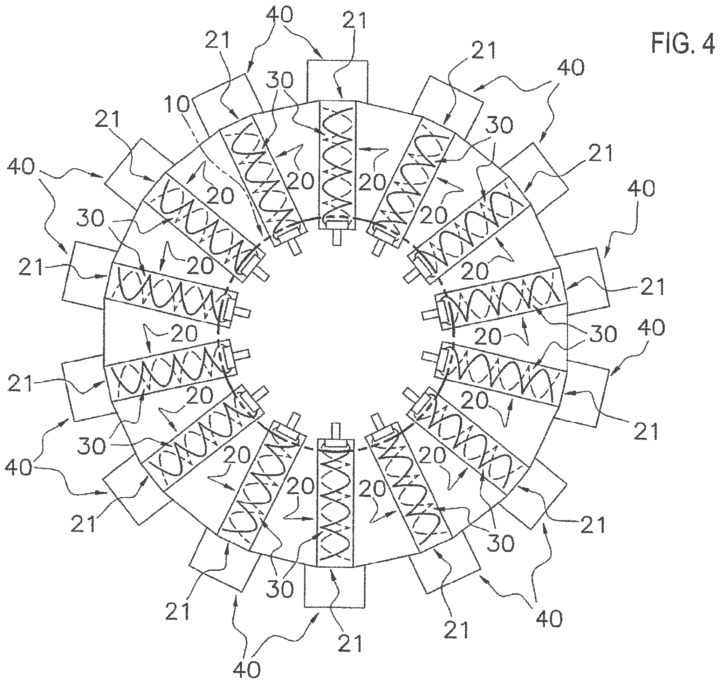

Fig. 4 is a schematic plan view illustrating the combination weighing device 1 in Fig. 1 when the combination weighing device 1 is viewed from above. Fig. 4 illustrates a state in which the distribution table 10 is detached. Only an outer edge position of the distribution table 10 is indicated by an alternate long and two short dashes line.

The distribution table 10 is a member that distributes the object supplied from the cross feeder (not illustrated) arranged in the upper portion of the combination weighing device 1. The distribution table 10 supplies the distributed object to the conveying unit 20.

The distribution table 10 is formed into a substantially circular shape in a planar view. The distribution table 10 includes a conical unit 11 arranged in the central portion and a peripheral unit 12 arranged in the periphery of the conical unit 11 (see Fig. 2). Both the conical unit 11 and the peripheral unit 12 are tilted such that the peripheral side of the distribution table 10 is lowered (see Fig. 3). The tilt of the conical unit 11 is steeper than that of the peripheral unit 12 (see Fig. 3).

The distribution table 10 is supported by a driving shaft (not illustrated) arranged below the distribution table 10. The driving shaft supporting the distribution table 10 is coupled to a distribution table motor (not illustrated) . The drive of the distribution table motor rotates the distribution table 10 about the vertically extending rotation axis C. In this case, the distribution table 10 may be rotated in a single direction, or the rotating direction of the distribution table 10 may be changed with lapse of time.

When the object is supplied from the cross feeder (not illustrated) arranged in the upper portion of the combination weighing device 1 to a neighborhood in the central portion of the distribution table 10 rotated by the distribution table motor, the distribution table 10 conveys the supplied object toward the outside in the radial direction while distributing the object in the circumferential direction by centrifugal force. The object, which is distributed and conveyed by the distribution table 10, is discharged from the outer periphery of the distribution table 10, and dropped in the trough 21 of one of the conveying units 20 (see Fig. 2).

The conveying unit 20 is a member that conveys the object supplied from the distribution table 10. The combination weighing device 1 of the embodiment includes 14 conveying units 20. However, the 14 conveying units 20 are indicated by way of example, but the number of the conveying units 20 is not limited to the 14 conveying units 20.

The plural conveying units 20 are arranged below the distribution table 10 so as to surround the distribution table 10 (see Fig. 2). In a planar view, the plural conveying units 20 extend radially from the surroundings of the distribution table 10 toward the pool hoppers 40 arranged around the distribution table 10 (see Fig. 4). More specifically, the plural conveying units 20 extend radially from a space below the distribution table 10 (see Fig. 3) toward the pool hoppers 40 arranged in the surroundings of the distribution table 10. The one weighing hopper 50 is provided below each corresponding pool hopper 40 (see Fig. 1). That is, the conveying units 20 extend radially from the surroundings of the distribution table 10 toward the weighing hoppers 50 arranged in the surroundings of the distribution table 10. The conveying unit 20 conveys the object distributed by the distribution table 10 toward the weighing hopper 50 (in a conveyance direction D of Fig. 3).

Each conveying unit 20 mainly includes the trough 21 and the screw unit 30 (see Fig. 2). The screw unit 30 is arranged in the trough 21.

The trough 21 extends from the space below the distribution table 10 toward the pool hopper 40 corresponding to the trough 21 (see Figs. 3 and 4). Each trough 21 extends radially with respect to the center of the distribution table 10 in a planar view (see Fig. 4). The troughs 21 included in the plural conveying units 20 extend radially from the distribution table 10 as a whole (see Fig. 4).

Each trough 21 is separated from an inner space of the frame 90 by an upstream sidewall 91 (see Fig. 3). The frame 90 is arranged below the distribution table 10 to support the distribution table 10. The frame 90 includes an opening 1001 in which the screw unit 30 is inserted. In the frame 90, at least a rotation driving member 1002 (to be described later) that transmits driving force to the screw unit 30 is accommodated in the inner space of the opening 1001 (see Fig. 3). The rotation driving member 1002 is connected to a motor provided in a main body of the combination weighing device 1, and rotated about a rotation axis D in Fig. 3 when the motor is driven.

Each trough 21 extends from the upstream sidewall 91, and includes the concave groove 22 including a semicircularly-curved inner surface 22a (see Fig. 2). The concave groove 22 is formed into a downwardly concave groove shape by the semicircularly-curved inner surface 22a. In a planar view, the concave groove 22 of the trough 21 extends radially outward from the upstream sidewall 91 to the pool hopper 40 with respect to the center of the distribution table 10. The concave groove 22 is tilted such that the outer edge side of the concave groove 22 is lowered, namely, such that the side of the pool hopper 40 is lower than the side of the distribution table 10 (see Fig. 3) .

The object discharged from the outer periphery of the distribution table 10 is supplied to the trough 21. Because the triangular-prism-shaped guide block 80 is arranged between the troughs 21 adjacent to each other (see Fig. 1), the object is supplied to one of the troughs 21 without dropping in the space between the troughs 21 adjacent to each other from the distribution table 10.

The object supplied to the trough 21 is conveyed by rotating the screw unit 30 arranged in the trough 21. More specifically, the screw unit 30 conveys the object toward the pool hopper 40 by rotating a screw member 31 arranged in the trough 21.

The one screw unit 30 is arranged in each trough 21 (see Fig. 4). The object dropped in the trough 21 is conveyed in the trough 21 by rotating the screw unit 30. A configuration of the screw unit 30 is described later.

The one pool hopper 40 is provided below an outer edge side of each trough 21. The pool hopper 40 accommodates and temporarily holds the object conveyed from the conveying unit 20. The pool hopper 40 supplies the temporarily-held object to the weighing hopper 50 provided below the pool hopper 40 by opening an openable gate (not illustrated) provided in a bottom portion of the pool hopper 40.

The weighing hopper 50 is an example of the weighing means. The weighing hoppers 50 are arranged in the surroundings of the distribution table 10. Specifically, the one weighing hopper 50 is provided below each pool hopper 40. In other words, the one weighing hopper 50 is provided below the outer edge side of the trough 21 of each conveying unit 20. The weighing hopper 50 accommodates and temporarily holds the object supplied from the pool hopper 40. The weighing hopper 50 supplies the temporarily-held object to the booster hopper 60 provided below the weighing hopper 50 by opening an openable gate (not illustrated) provided in a bottom portion of the weighing hopper 50.

Each weighing hopper 50 includes a weighing instrument (not illustrated) that weighs the weight of the object in the weighing hopper 50. For example, the weighing instrument is a load cell. A weighing result of the weighing instrument is transmitted to the controller (not illustrated) of the combination weighing device 1.

The one booster hopper 60 is provided below each weighing hopper 50. The booster hopper 60 is configured to be able to accommodate and temporarily hold the object supplied from the weighing hopper 50. The booster hopper 60 supplies the temporarily-held object to the collective discharge chute 70 provided below the booster hopper 60 by opening an openable gate (not illustrated) provided in a bottom portion of the booster hopper 60. When the booster hopper 60 opens the openable gate (not illustrated) provided in the bottom portion of the booster hopper 60 in receiving the object from the weighing hopper 50, the object can be supplied to the collective discharge chute 70 while the booster hopper 60 does not temporarily hold the object.

### (2-1; Specific configuration of screw unit 30)

The configuration of the screw unit 30 will be described below with reference to the drawings.

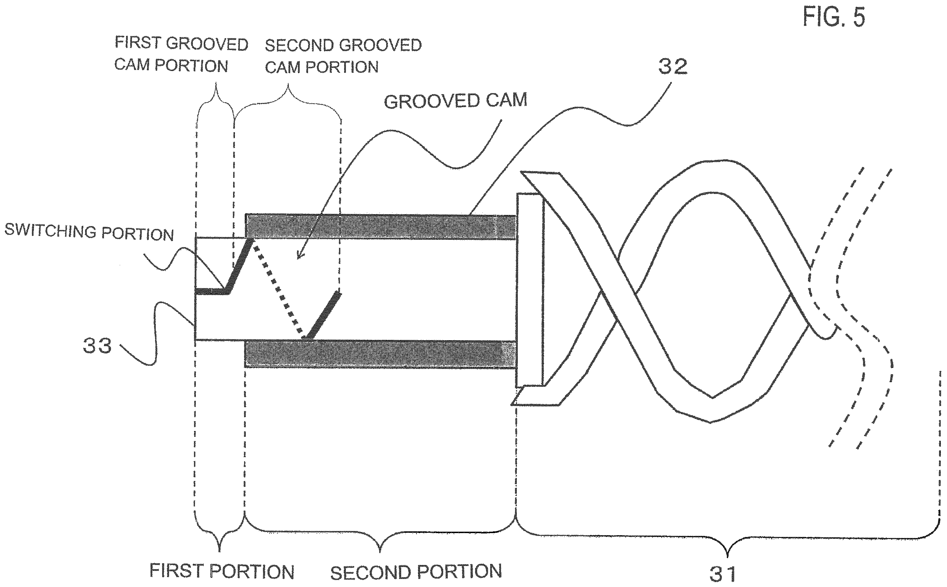

Fig. 5 is a schematic diagram illustrating a structure of the screw unit 30 of the embodiment. In Fig. 5, structures of linear members 31a and 31b are partially omitted for the convenience of the description.

Fig. 5 illustrates a state in which an outer diameter member 32 is cut on a predetermined plane for the purpose of understanding of a relationship between a grooved cam provided in an inner diameter member 33 and the outer diameter member 32 arranged around the grooved cam.

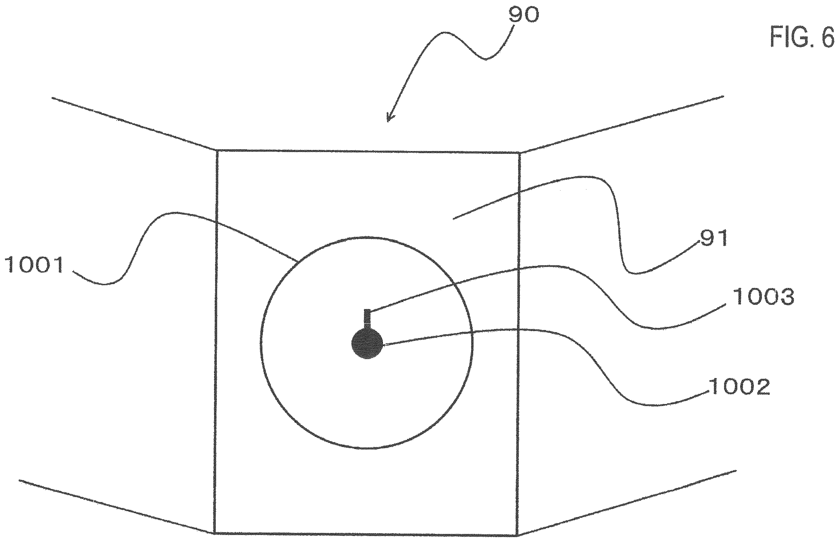

Fig. 6 is a view illustrating the frame 90 to which the screw unit 30 is attached and the opening 1001, the rotation driving member 1002, and the projection 1003 that are provided in the frame 90.

As illustrated in Figs. 5 and 6, the screw unit 30 is attached in the opening 1001 formed in the frame 90 by a user.

At this point, the opening 1001 has a hole-shaped structure formed in the frame 90. The rotation driving member 1002 connected to the motor is arranged inside of the opening 1001.

The rotation driving member 1002 is connected to the motor (not illustrated), and rotated about the rotation axis D in Fig. 3 by driving the motor . The rotation axis D is fixed in a direction substantially identical to a direction in which the screw unit 30 is inserted in the opening 1001.

The projection 1003 is formed at an end of the rotation driving member 1002. The projection 1003 rotates about the rotation axis D while the rotation driving member 1002 rotates. The projection 1003 is fitted in the grooved cam formed in the inner diameter member 33, and the projection 1003 can move while sliding on the grooved cam.

As illustrated in Fig. 5, the screw unit 30 mainly includes the screw member 31, the outer diameter member 32, and the inner diameter member 33.

As illustrated in Fig. 3, the screw member 31 includes at least the linear member 31a molded into a spiral shape. Sometimes the screw member 31 further includes the linear member 31b. At this point, the linear member 31b extends in the same direction as the linear member 31a, but the linear member 31b does not physically intersect the linear member 31a. Sections of the linear members 31a and 31b may be constructed with a perfect circle. Alternatively, the sections of the linear members 31a and 31b may be constructed with a polygonal shape such as a quadrangle. In the case that the sections of the linear members 31a and 31b are constructed with the polygonal shape, a transport capacity of the object is improved because what is called corners are formed in the linear members.

The screw member 31 is coupled to the inner diameter member 33, and the screw member 31 also rotates with the rotation of the inner diameter member 33 . That is, the inner diameter member 33 rotates in the same rotating direction as the rotation driving member 1002 by the rotation of the rotation driving member 1002 in Fig. 6. The rotation of the inner diameter member 33 rotates the screw member 31 coupled to the inner diameter member 33. By the rotation of the screw member 31, the object is conveyed in the trough 21 and supplied to the pool hopper 40.

The outer diameter member 32 is a cylindrical member connected to the screw member 31. Because the inner diameter member 33 is arranged inside of the outer diameter member 32, the outer diameter member 32 has a doughnut shape in section. The outer diameter member 32 is arranged around the inner diameter member 33 with a bearing interposed therebetween, and the outer diameter member 32 is configured so as to have a little influence on the rotating operation of the inner diameter member 33. That is, even if the inner diameter member 33 rotates, the outer diameter member 32 does not rotate by receiving a rotating force of the inner diameter member 33.

The inner diameter member 33 is a cylindrical member coupled to the screw member 31. The inner diameter member 33 has the doughnut shape in section because the rotation driving member 1002 and the projection 1003 are inserted into the inside of the inner diameter member 33. The inner diameter member 33 is arranged in a space formed inside the outer diameter member 32 . The inner diameter member 33 includes the grooved cam in which the projection 1003 is fitted. The projection 1003 slides on the grooved cam while being fitted in the grooved cam. A spiral groove is formed in the grooved cam. Specifically, the grooved cam includes a groove that is formed into the spiral shape from a starting point at which the projection 1003 is initially fitted in the inner diameter member 33. When the projection 1003 slides on and moves in the grooved cam, the inner diameter member 33 is inserted in the main body.

For the convenience of the description, a portion in which the projection 1003 is initially fitted when the screw unit 30 is attached to the main body is referred to as a first grooved cam portion. A portion in which the projection 1003 slides and moves while the projection 1003 is fitted in the first grooved cam portion is referred to as a second grooved cam portion.

The first grooved cam portion and the second grooved cam portion are physically continuously formed. That is, after the projection 1003 slides on and moves in the first grooved cam portion, the projection 1003 can continuously slide on and move in the second grooved cam portion. However, it is necessary for the user to change a direction of force applied to the screw unit 30 in order to move the projection 1003 from the first grooved cam portion to the second grooved cam portion or from the second grooved cam portion to the first grooved cam portion.

More specifically, desirably a direction in which the projection 1003 slides and moves is discontinuous in a portion in which the first grooved cam portion and the second grooved cam portion are switched with each other. Specifically, the first grooved cam portion has the configuration in which the grooved cam is formed in the same direction as the rotation axis D, and the second grooved cam portion has the configuration in which the grooved cam is formed into the spiral shape with respect to the outer circumference of the inner diameter member 33.

In these configurations, the operation performed in fitting the projection 1003 in the first grooved cam portion can differ from the operation performed in sliding and moving the projection 1003 in the first grooved cam portion and the second grooved cam portion. In the case that the projection 1003 is fitted in the first grooved cam portion, the user may apply the force in the same direction as the rotation axis D. Therefore, even if the user hardly sees the portion in which the projection 1003 and the first grooved cam portion are attached to each other, the user can intuitively fit the screw unit 30 in the projection 1003.

The configurations of the first grooved cam portion and the second grooved cam portion are not limited to the above configurations, but any configuration may be used as long as the force applied to the screw unit 30 by the user is changed.

The inner diameter member 33 also includes a first portion and a second portion. The first portion is one in which the outer circumference of the inner diameter member 33 is not covered with the outer diameter member 32. That is, the first portion in the inner diameter member 33 is configured so as to be visually recognized by the user in attaching the screw unit 30 to the main body. For example, even in the case that the user attaches the screw unit 30 to the main body, the user can attach the screw unit 30 while visually recognizing both the first grooved cam portion formed in the first portion and the projection 1003. Therefore, the convenience for the user can be improved in attaching of the screw unit 30. On the other hand, the second portion is one in which the outer circumference of the inner diameter member 33 is covered with the outer diameter member 32. Therefore, the user cannot visually recognize the second portion in attaching the screw unit 30. However, for example, because the outer circumference is covered with the outer diameter member 32, the outer circumference gets hardly dirty by moisture generated from the object. Therefore, the hygiene can be improved.

In this case, at least the first grooved cam portion is formed with respect to the first portion. At least the second grooved cam portion is formed with respect to the second portion. At least a part of the second grooved cam portion may be formed in the first portion. At least a part of the first grooved cam portion may be formed in the second portion.

As described above, the outer diameter member 32 and the inner diameter member 33 of the embodiment are divided into the first portion that is not covered with the outer diameter member 32 and the second portion that is covered with the outer diameter member 32. Therefore, both the convenience for the user during the attachment and the hygiene during the operation of the combination weighing device 1 are improved.

### (2-2; User's operation to attach screw unit 30 to frame 90)

The user's operation to attach the screw unit 30 to the frame 90 will be described below.

The user holds the screw unit 30. At this point, the user fits the projection 1003 formed in the rotation driving member 1002 in the first grooved cam portion while visually recognizing the first grooved cam portion formed in the first portion of the inner diameter member 33.

Then the user rotates the screw member 31 while the projection 1003 is fitted in the first grooved cam portion. Therefore, the projection 1003 is moved from the first grooved cam portion to the second grooved cam portion while being slid, and the projection 1003 is moved in the second grooved cam portion while being slid. At this point, because at least the second grooved cam portion is formed into the spiral shape, the screw unit 30 is inserted in the opening 1001 with the movement of the projection 1003 on the second grooved cam portion.

The user fits the outer diameter member 32 in the opening 1001 while visually recognizing the outer diameter member 32, and the user rotates the screw member 31.

The projection 1003 slides on and moves in the second grooved cam portion, and reaches a terminal end of the second grooved cam portion. At this point, the user cannot rotate the screw member 31 any more. Therefore, the user can attach the screw unit 30 to the frame 90.

### (2-3; User's operation to detach screw unit 30 from main body)

The user's operation to detach the screw unit 30 from the frame 90 will be described below.

While the projection 1003 reaches the terminal end of the second grooved cam portion, the user rotates the screw member 31 in the opposite direction to the rotating direction in which the screw unit 30 is attached. When the user rotates the screw member 31 in the opposite direction to the direction for attaching, the projection 1003 slides on and moves in the second grooved cam portion.

The user can detach the outer diameter member 32 from the opening 1001 by continuously rotating the screw member 31. At this point, the projection 1003 does not move from the second grooved cam portion to the first grooved cam portion only by the operation to rotate the screw member 31. That is, the user cannot rotate the screw member 31 any more when the projection 1003 reaches the second grooved cam portion. At this point, the user pulls up the screw member 31 from the opening 1001 in a direction of the rotation axis D, which allows the user to detach the screw unit 30 from the frame 90. Thus, the projection 1003 is configured to move from the second grooved cam portion to the first grooved cam portion by the operation except for the rotation, which allows the user to prevent the screw unit 30 from dropping out of the main body in unintended timing due to the excessive rotation of the screw member 31. The unanticipated drop of the screw unit 30 from the main body can be decreased, and therefore a malfunction caused by the drop of the screw unit 30 can be reduced. Particularly, the screw unit 30 of the combination weighing device 1 is a long and thin member, and frequently the weight is concentrated on the portion in which the screw unit 30 is attached to the frame 90. For this reason, it is important to form the first grooved cam portion and second grooved cam portion as described above from the viewpoint of improving the user's convenience.

The above operation enables the user to detach the screw unit 30 from the main body.

### (3; Summary)

The combination weighing device 1 of the embodiment includes the frame 90, the plural pool hoppers 40, the trough 21 that temporarily retains the externally-supplied object, and the screw unit 30 that extends radially in the directions of the plural pool hoppers 40 from the center of the main body in a planar view, the screw unit 30 being the spiral member, which conveys the object retained in the trough 21 toward the pool hoppers 40, the screw unit 30 rotating in the trough 21 to convey the object. In the combination weighing device 1, the frame 90 includes the opening 1001 to which the plural screw units 30 are attached and the projection 1003 that is arranged in the opening 1001 to rotate about the rotation axis fixed in the direction in which the screw unit is attached to the opening. The screw unit 30 includes the grooved cam in which the projection 1003 arranged in the opening 1001 is fitted in the end of the screw unit 30, the projection 1003 sliding on the grooved cam. The grooved cam has the spiral grooved cam structure formed from the end toward the direction of the opposite end. When the screw unit 30 is rotated after the projection 1003 is fitted in the grooved cam, the projection 1003 slides on the grooved cam to insert the screw unit 30 in the opening 1001.

In the configuration, when attaching or detaching the screw unit 30 to or from the frame 90, the user rotates the screw unit 30 by the user' s hand, which allows the user to attach or detach the screw unit 30 to or from the frame 90. Therefore, the convenience for the user and the hygiene can be improved because the user can attach or detach the screw unit 30 to or from the frame 90 while not reaching for the inside of the frame 90 to manipulate the detaching mechanism.

Conventionally, for the combination weighing device 1 in which the guide block 80 is arranged between the troughs 21, it is necessary for the user to reach for the small space formed between the guide blocks 80 adjacent to each other in order to exchange the screw unit 30. On the other hand, in the embodiment, even if the guide block 80 is arranged between the troughs 21, the user can perform the detaching work only by rotating the end of the screw unit 30. Therefore, a part of user's arm that gets dirty when the user reaches for the small space formedbetween the guide blocks 80 adjacent to each other can be prevented to improve the hygiene.

In the combination weighing device 1 of the embodiment, the end of the screw unit 30 includes the inner diameter member 33 that includes the grooved cam and the outer diameter member 32 that is arranged in an outer circumference of the inner diameter member 33, the first portion of the inner diameter member 33 is not covered with the outer diameter member 32, but the first portion includes the first grooved cam portion of the grooved cam in which the projection 1003 is initially fitted when the screw unit 30 is inserted in the opening 1001, and the second portion different from the first portion in the inner diameter member 33 is covered with the outer diameter member 32.

In the configuration, the portion covered with the outer diameter member 32 and the portion that is not covered with the outer diameter member 32 can be formed with respect to the inner diameter member 33. Therefore, the user can attach the screw unit 30 to the frame 90 while checking the portion that is not covered with the outer diameter member 32 in the inner diameter member 33. Therefore, the convenience for the user can be improved when the screw unit 30 is attached to the frame 90. In the inner diameter member 33, the portion covered with the outer diameter member 32 gets hardly dirty by the object supplied from the distribution table 10 to the trough 21. Therefore, both the convenience for the user and the hygiene can be improved.

In the screw unit 30, the rotating direction in which the user detaches the screw unit 30 may differ from the rotating direction in which the object retained in the trough 21 is conveyed. In other words, the first rotating direction in which the rotation driving member 1002 rotates the screw unit 30 in order to convey the object differs from the second rotating direction in which the screw unit 30 is rotated to attach the screw unit 30 to the rotation driving member 1002.

Therefore, the screw unit 30 rotates in the attaching direction when the screw unit 30 conveys the object, so that the screw unit 30 can be prevented from dropping out of the frame 90 or from loosening.

When the screw unit 30 is attached to or detached from the frame 90, a lock mechanism may be provided such that the rotation driving member 1002 does not rotate. When the user rotates the screw unit 30 in order to attach or detach the screw unit 30 to or from the frame 90, sometimes the rotation driving member 1002 rotates in conjunction with the rotation of the screw unit 30 depending on friction between the projection 1003 and the grooved cam. Therefore, the lock mechanism is provided such that the rotation driving member 1002 does not rotate, whereby the convenience can be improved when the user attaches or detaches the screw unit 30 to or from the frame 90. The operation to turn on and off the lock mechanism may be performed when the user issues an input instruction of cleaning or the like. The lock mechanism may be operated when the detachment of the screw unit 30 is detected by a sensor or the like.

### (4-1; First modification)

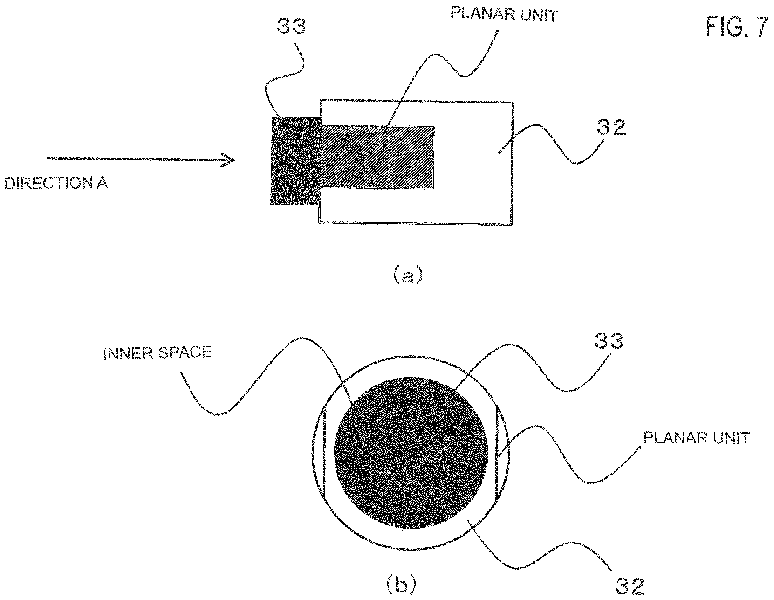

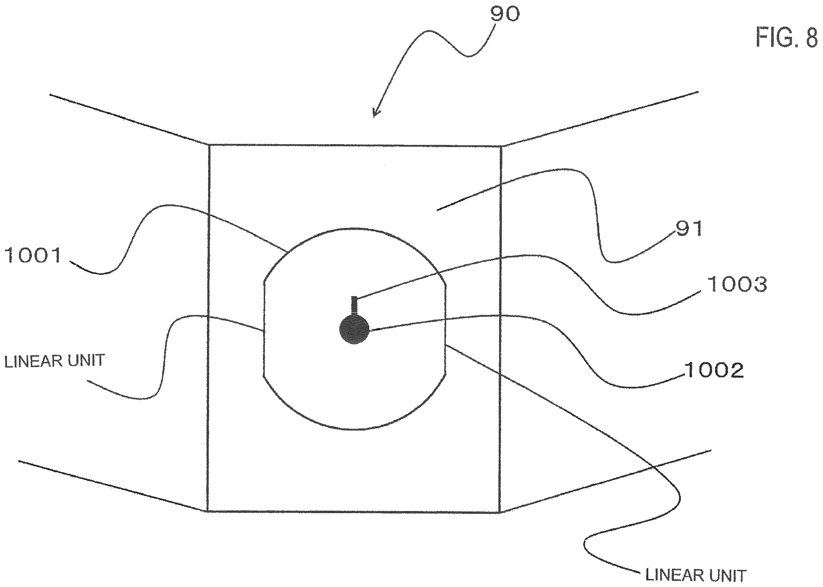

In the combination weighing device 1, the outer diameter member 32 and the opening 1001 may be formed into shapes as illustrated in Figs. 7 and 8.

Figs. 7(a) and 7(b) are views for explaining a structure of the outer diameter member 32 according to a first modification. For the convenience of the description, the grooved cam formed in the inner diameter member 33 is omitted in Figs. 7(a) and 7(b). Fig. 7(a) is a view illustrating a structure when the outer diameter member 32 and the inner diameter member 33 are laterally viewed. In Fig. 7(a), a shaded portion indicates a planar unit formed in the outer diameter member 32. In Fig. 7(a), a gray portion indicates the inner diameter member 33. Fig. 7(b) is a view illustrating the structure when the outer diameter member 32 and the inner diameter member 33 are viewed in a direction A of Fig. 7(a). In Fig. 7(b), the gray portion indicates the inner diameter member 33, and a black region indicates an inner space formed between the inner diameter member 33 and the outer diameter member 32.

Fig. 8 is a view for explaining a structure of the opening 1001 of the modification.

The outer diameter member 32 has the structure (the shaded portion in Fig. 7(a)) in which at least one planar unit is formed in a part of the outer circumference, and the opening 1001 has the structure in which the same number of linear units (see Fig. 8) as the planar units formed in the outer diameter member 32 is formed in the part of the outer circumference. The planar unit formed in the outer diameter member 32 and the linear unit formed in the opening are joined to each other when the screw unit 30 is attached to the frame 90.

In the configuration, the planar unit formed in the outer diameter member 32 and the linear unit formed in the opening 1001 are joined to each other while the screw unit 30 is attached to the frame 90. Thus, the planar unit and the linear unit are joined to each other in a face-to-face manner, so that rattle of the screw unit 30 can be reduced with respect to the frame 90 even when the screw member 31 is conveying the object in the combination weighing device 1.

Figs. 7(a), 7(b), and 8 illustrate the examples in which the two planar units and the two linear units are formed in the outer diameter member 32 and the opening 1001, respectively. However, the planar units and the linear units are not limited to the above configuration, and three planar units and linear units or at least four planar units and linear units may be formed in the case that possibly the rattle is reduced when the screw unit 30 is attached to the frame 90. Alternatively, one planar unit and one linear unit may be formed.

The linear unit in the opening 1001 may be formed in the substantially vertically downward direction, or he linear unit may be formed in the direction orthogonal to the vertically downward direction. The retention of the moisture or flying objects caused by the object in the linear unit can be reduced in the case that the linear unit is formed in the substantially vertically downward direction. Therefore, the hygiene can be improved.

### (4-2; Second modification)

In the configuration of the embodiment, the inner diameter member 33 includes the grooved cam, and the rotation driving member 1002 includes the projection 1003. However, the embodiment is not limited to the above configuration, and the grooved cam may be formed in the rotation driving member 1002 while the outer diameter member 32 may include the projection 1003.

That is, the combination weighing device may include: the plural pool hoppers 40; the trough 21 that extends radially in directions of the plural weighing units from the center of the main body in a planar view; the screw unit 30 that is the spiral member, which is arranged in the trough 21 to convey the object in the trough 21 toward the pool hopper 40, the screw unit 30 rotating in the trough 21 to convey the object; and the rotation driving member 1002 that rotates the screw unit 30. In the combination weighing device, one of the screw unit 30 and the rotation driving member 1002 includes the projection 1003 that rotates about the rotation axis fixed in the direction in which the screw unit 30 is attached at an end, and the other includes the grooved cam in which the projection 1003 is fitted and slides at an end, and after the projection 1003 is fitted in the grooved cam, the projection 1003 slides on the grooved cam by a rotation of the screw unit 30 to attach the screw unit 30 to the rotation driving member.

In the configuration, when attaching or detaching the screw unit 30 to or from the frame 90, the user rotates the screw unit 30 by the user' s hand, which allows the user to attach or detach the screw unit 30 to or from the frame 90. Therefore, the convenience for the user and the hygiene can be improved because the user can attach or detach the screw unit 30 to or from the frame 90 while not reaching for the inside of the frame 90 to manipulate the detaching mechanism.

The grooved cam formed in the inner diameter member 33 or the rotation driving member 1002 may be attached when the projection 1003 rotates by 360 degrees. The grooved cam may be attached when the projection 1003 rotates by 720 degrees. In the embodiment, the projection 1003 and the screw unit 30 may be attached to each other when the projection 1003 rotates by an angle set by a designer in a wider range of 90° to 1080°. At this point, when the rotation angle is set to a predetermined angle within the range of 360° to 720°, the twist of the user's arm is reduced, so that the convenience for the user can be improved.

Although the embodiment is described above as the illustration of the technology disclosed in the present application, the technology disclosed in the present disclosure is not limited to the embodiment, but the technology can properly be applied to the embodiment after the changes, replacements, additions, and omissions. A new embodiment can be made by a combination of the components described in the embodiment and the modifications.

The embodiment is described above as an example of the technology of the present disclosure, and the accompanying drawings and detailed description are given for this end.

Accordingly, not only the component necessary to solve the problem but also the component that is not necessary to solve the problem may be included in the components described in the accompanying drawings and the detailed description, to illustrate the above technology. Therefore, it is noted that, even if the component that is not necessary to solve the problem is included in the accompanying drawings and the detailed description, the component that is not necessary to solve the problem should not be recognized to be the necessary component.

### Industrial Applicability

The present disclosure can be applied to a combination weighing device in which a screw unit is exchanged in exchanging an object.

### Reference Signs List

1 combination weighing device
10 distribution table
20 conveyor
21 trough
22 concave groove
22a inner surface of concave groove (surface facing screw member of trough)
30 screw unit
31 screw member
31a linear member
31b linear member
32 outer diameter member
33 inner diameter member
40 pool hopper
50 weighing hopper (weighing means)
60 booster hopper
70 collective discharge chute
80 guide block
1001 opening
1002 rotation driving member
1003 projection
D conveyance direction of conveying unit (conveyance direction of conveying means)

## Claims

1. A combination weighing device (1) comprising:
a main body;
a plurality of weighing units (50);
a plurality of troughs (21) that extend radially in directions of the plurality of weighing units (50) from a center of the main body in a planar view;
a spiral member (31) of a screw unit (30) arranged in each of the plurality of troughs (21) to convey an object in the trough (21) towards one of the weighing units (50), the spiral member (31) rotating in the trough to convey the object; and
a rotation driving member (1002) that rotates the screw unit (30);**characterised in that**
the screw unit (31) further comprises, at its radial inner end, either a grooved cam or a projection (1003) coupled to the spiral member (31) and the rotation driving member (1002) includes, at its radial outward end, the respective other one of the grooved cam or the projection (1003),
wherein the screw unit (31) is attachable to the rotation driving member (1002) by fitting the projection (1003) in the grooved cam at a first end, and sliding the projection on the grooved cam by a rotation of the screw unit (31) towards a second end of the grooved cam.

2. The combination weighing device (1) according to claim 1 further comprising:
a distribution table (10) arranged to distribute a suppled object; and
a plurality of guide blocks (80), each guide block arranged between each of the plurality of troughs adjacent to each other to prevent the object, which is distributed from the distribution table, from dropping in a space between the troughs adjacent to each other; wherein
the spiral member (31) of the screw unit (30) arranged to convey the object supplied from the distribution table to the trough toward the weighing unit.

3. The combination weighing device (1) according to any one of claims 1 and 2, wherein
a first rotating direction in which the rotation driving member (1002) rotates the screw unit (30) to convey the object differs from a second rotating direction in which the screw unit (30) is rotated to attach the screw units to the rotation driving member.

4. The combination weighing device (10) according to any one of claims 1 to 3, wherein
the inner radial end of the screw unit (30) includes an inner diameter member (33) that comprises the grooved cam and an outer diameter member (32) that is arranged in an outer circumference of the inner diameter member (33);
a first portion of the inner diameter member (33) is not covered with the outer diameter member (32), and the first portion includes a first grooved cam portion of the grooved cam in which the first portion is initially fitted to attach the grooved cam; and
a second portion different from the first portion in the inner diameter member (33) is covered with the outer diameter member (32), and the second portion includes a second grooved cam portion except for the first grooved cam portion in the grooved cam.

5. The combination weighing device (10) according to any one of claims 1 to 3, wherein
the inner radial end of the screw unit (30) includes an inner diameter member (33) that comprises the projection and an outer diameter member (32) that is arranged in an outer circumference of the inner diameter member (33);
a first portion of the inner diameter member (33) is not covered with the outer diameter member (32), and the first portion further includes the projection; and
a second portion different from the first portion in the inner diameter member (33) is covered with the outer diameter member (32).

6. The combination weighing device (10) according to any one of claims 4 and 5, further comprising an opening (1001) that is formed around the rotation driving member (1002), the inner radial end of the screw unit (30) being fitted in the opening when the screw unit is attached to the rotation driving member (1002), wherein
the outer diameter member has a structure in which at least one planar unit is formed in a part of the outer circumference;
the opening has a structure in which the same number of linear units as the planar units formed in the outer diameter member is formed in the part of the outer circumference; and
the planar unit formed in the outer diameter member and the linear unit formed in the opening are joined to each other when the screw unit is attached to the rotation driving member.

7. The combination weighing device (10) according to any one of claim 6, wherein the linear unit of the opening is formed in a substantially vertically downward direction.

8. The combination weighing device (10) according to any one of claims 1 and 2, wherein
the grooved cam includes a first grooved cam portion and a second grooved cam portion;
the first grooved cam portion and the second grooved cam portion are continuously formed in the grooved cam; and
a direction in which the projection slides on the first grooved cam portion differs from a direction in which the projection slides on the second grooved cam portion.

9. The combination weighing device (10) according to any one of claims 1 to 8, wherein
the screw unit (30) is attached to the rotation driving member (1002) when the screw unit (30) is rotated by an angle fixed within a range of 90° to 1080° after the projection is fitted in the grooved cam.

10. The combination weighing device (10) according to claim 9, wherein
the screw unit (30) is attached to the rotation driving member (1002) when the screw unit (30) is rotated by an angle fixed within a range of 360° to 720° after the projection is fitted in the grooved cam.

11. The combination weighing device (10) according to claim 9, wherein
the screw unit (30) is attached to the rotation driving member (1002) when the screw unit (30) is rotated by 360° after the projection is fitted in the grooved cam.

## Patentansprüche

1. Kombinationswägevorrichtung (1), umfassend:
einen Hauptkörper;
eine Vielzahl von Wägeeinheiten (50);
eine Vielzahl von Durchgängen (21), die sich radial in Richtungen der Vielzahl von Wägeeinheiten (50) von einer Mitte des Hauptkörpers in einer planaren Ansicht erstrecken;
ein Spiralelement (31) einer Schraubeneinheit (30), angeordnet in jedem der Vielzahl von Durchgängen (21), um ein Objekt in dem Durchgang (21) hin zu einer der Wägeeinheiten (50) zu bewegen, wobei das Spiralelement (31) in dem Durchgang rotiert, um das Objekt zu bewegen; und
ein Rotationsantriebselement (1002), das die Schraubeneinheit (30) rotiert;
**dadurch gekennzeichnet, dass**
die Schraubeneinheit (31) ferner an ihrem radialen inneren Ende entweder einen gerillten Nocken oder einen Vorsprung (1003) umfasst, der mit dem Spiralelement (31) gekoppelt ist, und das Rotationsantriebselement (1002) an seinem radialen äußeren Ende den jeweils anderen des gerillten Nockens oder des Vorsprungs (1003) beinhaltet,
wobei die Schraubeneinheit (31) an dem Rotationsantriebselement (1002) befestigbar ist, durch Einpassen des Vorsprungs (1003) in den gerillten Nocken an einem ersten Ende, und durch Gleiten des Vorsprungs auf den gerillten Nocken durch eine Rotation der Schraubeneinheit (31) hin zu einem zweiten Ende des gerillten Nockens.

2. Kombinationswägevorrichtung (1) nach Anspruch 1, ferner umfassend:
einen Verteilertisch (10), der angeordnet ist, um ein zugeführtes Objekt zu verteilen; und
eine Vielzahl von Führungsblöcken (80), wobei jeder Führungsblock zwischen jedem der Vielzahl von Durchgängen angrenzend aneinander angeordnet ist, um zu verhindern, dass das Objekt, das von dem Verteilertisch verteilt wird, in einen Raum zwischen den Durchgängen fällt, die aneinander angrenzen; wobei
das Spiralelement (31) der Schraubeneinheit (30) angeordnet ist, um das vom Verteilertisch zugeführte Objekt zu dem Durchgang hin zu der Wägeeinheit zu bewegen.

3. Kombinationswägevorrichtung (1) gemäß irgendeinem der Ansprüche 1 und 2, wobei
sich eine erste Rotationsrichtung, in welche das Rotationsantriebselement (1002) die Schraubeneinheit (30) rotiert, um das Objekt zu bewegen, von einer zweiten Rotationsrichtung unterscheidet, in welche die Schraubeneinheit (30) rotiert wird, um die Schraubeneinheiten an dem Rotationsantriebselement zu befestigen.

4. Kombinationswägevorrichtung (10) gemäß irgendeinem der Ansprüche 1 bis 3, wobei
das innere radiale Ende der Schraubeneinheit (30) ein inneres Durchmesserelement (33) beinhaltet, das den gerillten Nocken umfasst, und ein äußeres Durchmesserelement (32), das in einem äußeren Umfang des inneren Durchmesserelements (33) angeordnet ist;
ein erster Abschnitt des inneren Durchmesserelements (33) nicht mit dem äußeren Durchmesserelement (32) bedeckt ist, und der erste Abschnitt einen ersten gerillten Nockenabschnitt des gerillten Nockens beinhaltet, in dem der erste Abschnitt anfänglich eingepasst ist, um den gerillten Nocken zu befestigen; und
ein zweiter Abschnitt, der unterschiedlich von dem ersten Abschnitt in dem inneren Durchmesserelement (33) ist, von dem äußeren Durchmesserelement (32) bedeckt ist, und der zweite Abschnitt einen zweiten gerillten Nockenabschnitt beinhaltet, außer für den ersten gerillten Nockenabschnitt in dem gerillten Nocken.

5. Kombinationswägevorrichtung (10) gemäß irgendeinem der Ansprüche 1 bis 3, wobei
das innere radiale Ende der Schraubeneinheit (30) ein inneres Durchmesserelement (33) beinhaltet, das den Vorsprung umfasst, und ein äußeres Durchmesserelement (32) beinhaltet, das in einem äußeren Umfang des inneren Durchmesserelements (33) angeordnet ist;
ein erster Abschnitt des inneren Durchmesserelements (33) nicht mit dem äußeren Durchmesserelement (32) bedeckt ist, und der erste Abschnitt ferner den Vorsprung beinhaltet,
ein zweiter Abschnitt, der unterschiedlich von dem ersten Abschnitt in dem inneren Durchmesserelement (33) ist, von dem äußeren Durchmesserelement (32) bedeckt ist

6. Kombinationswägevorrichtung (10) nach irgendeinem der Ansprüche 4 und 5, ferner umfassend eine Öffnung (1001), die um das Rotationsantriebselement (1002) herum gebildet ist, wobei das innere radiale Ende der Schraubeneinheit (30) in die Öffnung eingepasst ist, wenn die Schraubeneinheit an dem Rotationsantriebselement (1002) befestigt ist, wobei
das äußere Durchmesserelement eine Struktur aufweist, in der zumindest eine planare Einheit in einem Teil des äußeren Umfangs gebildet ist;
die Öffnung eine Struktur aufweist, in der die gleiche Anzahl linearer Einheiten wie die in dem äußeren Durchmesserelement gebildeten planaren Einheiten in dem Teil des äußeren Umfangs gebildet ist; und
die planare Einheit, die in dem äußeren Durchmesserelement gebildet ist, und die lineare Einheit, die in der Öffnung gebildet ist, miteinander verbunden sind, wenn die Schraubeneinheit an dem Rotationsantriebselement befestigt ist.

7. Kombinationswägevorrichtung (10) nach Anspruch 6, wobei die lineare Einheit der Öffnung in einer im Wesentlichen vertikalen Abwärtsrichtung gebildet ist.

8. Kombinationswägevorrichtung (10) gemäß irgendeinem der Ansprüche 1 und 2, wobei
der gerillte Nocken einen ersten gerillten Nockenabschnitt und einen zweiten gerillten Nockenabschnitt beinhaltet;
der erste gerillte Nockenabschnitt und der zweite gerillte Nockenabschnitt kontinuierlich in dem gerillten Nocken gebildet sind; und
sich eine Richtung, in welcher der Vorsprung auf dem ersten gerillten Nockenabschnitt gleitet, von einer Richtung unterscheidet, in welcher der Vorsprung auf dem zweiten gerillten Nockenabschnitt gleitet.

9. Kombinationswägevorrichtung (10) gemäß irgendeinem der Ansprüche 1 bis 8, wobei
die Schraubeneinheit (30) an dem Rotationsantriebselement (1002) befestigt ist, wenn die Schraubeneinheit (30) um einen Winkel rotiert wird, der in einem Bereich von 90° bis 1080° festgelegt ist, nachdem der Vorsprung in den gerillten Nocken eingepasst ist.

10. Kombinationswägevorrichtung (10) nach Anspruch 9, wobei:
die Schraubeneinheit (30) an dem Rotationsantriebselement (1002) befestigt ist, wenn die Schraubeneinheit (30) um einen Winkel rotiert wird, der in einem Bereich von 360° bis 720° festgelegt ist, nachdem der Vorsprung in den gerillten Nocken eingepasst ist.

11. Kombinationswägevorrichtung (10) nach Anspruch 9, wobei:
die Schraubeneinheit (30) an dem Rotationsantriebselement (1002) befestigt ist, wenn die Schraubeneinheit (30) um 360° rotiert wird, nachdem der Vorsprung in den gerillten Nocken eingepasst ist.

## Revendications

1. Un dispositif de pesage combiné (1) comprenant :
un corps principal ;
une pluralité d'unités de pesage (50) ;
une pluralité de goulottes (21) qui s'étendent radialement dans des directions de la pluralité d'unités de pesage (50) à partir d'un centre du corps principal en vue en plan ;
un organe spiralé (31) d'une unité à vis (30) agencée dans chacune de la pluralité de goulottes (21) pour déplacer un objet dans la goulotte (21) en direction de l'une des unités de pesage (50), l'organe spiralé (31) tournant dans la goulotte pour déplacer l'objet ; et
un organe d'entrainement en rotation (1002) qui fait tourner l'unité à vis (30) ;
**caractérisé en ce que** l'unité à vis (31) comprend en outre, à son extrémité intérieure radiale, soit une came à gorge soit un doigt (1003) couplé(e) à l'organe spiralé (31) et l'organe d'entrainement en rotation (1002) comprend, à son extrémité extérieure radiale, l'autre respectif d'entre la came à gorge ou le doigt (1003),
dans lequel l'unité à vis (31) peut être solidarisée à l'organe d'entrainement en rotation (1002) par ajustement du doigt (1003) dans la came à gorge à une première extrémité, et le coulissement du doigt sur la came à gorge par une rotation de l'unité à vis (31) en direction d'une seconde extrémité de la came à gorge.

2. Le dispositif de pesage combiné (1) selon la revendication 1, comprenant en outre :
une table de distribution (10) agencée pour distribuer un objet délivré ; et
une pluralité de blocs de guidage (80), chaque bloc de guidage étant agencé entre chacune de la pluralité de goulottes adjacentes les unes aux autres pour empêcher que l'objet, qui est distribué à partir de la table de distribution, ne tombe dans un espace entre les goulottes adjacentes les unes aux autres ; dans lequel
l'organe spiralé (31) de l'unité à vis (30) est agencé pour déplacer l'objet délivré à partir de la table de distribution à la goulotte en direction de l'unité de pesage.

3. Le dispositif de pesage combiné (1) selon l'une des revendications 1 et 2, dans lequel
un premier sens de rotation dans lequel l'organe d'entrainement en rotation (1002) fait tourner l'unité à vis (30) pour déplacer l'objet est différent d'un second sens de rotation dans lequel l'unité à vis (30) est entrainée en rotation pour solidariser les unités à vis à l'organe d'entrainement en rotation.

4. Le dispositif de pesage combiné (10) selon l'une des revendications 1 à 3, dans lequel
l'extrémité radiale interne de l'unité à vis (30) comprend un organe de diamètre interne (33) qui inclut la came à gorge et un organe de diamètre externe (32) qui est agencé dans une circonférence externe de l'organe de diamètre interne (33) ;
une première partie de l'organe de diamètre interne (33) n'est pas recouverte par l'organe de diamètre externe (32), et la première partie comprend une première partie de came à gorge de la came à gorge dans laquelle la première partie est initialement ajustée pour solidariser la came à gorge ; et
une seconde partie différente de la première partie dans l'organe de diamètre interne (33) est recouverte par l'organe de diamètre externe (32), et la seconde partie inclut une seconde partie de came à gorge à l'exclusion de la première partie de came à gorge dans la came à gorge.

5. Le dispositif de pesage combiné (1) selon l'une des revendications 1 à 3, dans lequel l'extrémité radiale interne de l'unité à vis (30) comprend un organe de diamètre interne (33) qui comprend le doigt et un organe de diamètre externe (32) qui est agencé dans une circonférence externe de l'organe de diamètre interne (33) ;
une première partie de l'organe de diamètre interne (33) n'est pas recouverte par l'organe de diamètre externe (32), et la première partie comprend en outre le doigt ; et
une seconde partie différente de la première partie de l'organe de diamètre interne (33) est recouverte par l'organe de diamètre externe (32).

6. Le dispositif de pesage combiné (1) selon l'une des revendications 4 et 5, comprenant en outre une ouverture (1001) qui est formée autour de l'organe d'entrainement en rotation (1002), l'extrémité radiale interne de l'unité à vis (30) étant ajustée dans l'ouverture lorsque l'unité à vis est solidarisée à l'organe d'entrainement en rotation (1002), dans lequel
l'organe de diamètre externe possède une structure dans laquelle au moins une unité plane est formée dans une partie de la circonférence externe ;
l'ouverture présente une structure dans laquelle est formé le même nombre d'unités linéaires que les unités planes formées dans l'organe de diamètre externe dans la partie de la circonférence externe ; et
l'unité plane formée dans l'organe de diamètre externe et l'unité linéaire formée dans l'ouverture sont réunies l'une à l'autre lorsque l'unité à vis est solidarisée à l'organe d'entrainement en rotation.

7. Le dispositif de pesage combiné (1) selon la revendication 6, dans lequel l'unité linéaire de l'ouverture est formée dans une direction substantiellement verticale vers le bas.

8. Le dispositif de pesage combiné (1) selon l'une des revendications 1 et 2, dans lequel
la came à gorge comprend une première partie de came à gorge et une seconde partie de came à gorge ;
la première partie de came à gorge et la seconde partie de came à gorge sont formées de façon continue dans la came à gorge ; et
une direction dans laquelle coulisse le doigt sur la première partie de came à gorge diffère d'une direction dans laquelle coulisse le doigt sur la seconde partie de came à gorge.

9. Le dispositif de pesage combiné (1) selon l'une des revendications 1 à 8, dans lequel l'unité à vis (30) est solidarisée à l'organe d'entrainement en rotation (1002) lorsque l'unité à vis (30) est entrainée en rotation d'un angle fixe compris dans une plage allant de 90° à 1080° après que le doigt est ajusté dans la came à gorge.

10. Le dispositif de pesage combiné (1) selon la revendication 9, dans lequel l'unité à vis (30) est solidarisée à l'organe d'entrainement en rotation (1002) lorsque l'unité à vis (30) est entrainée en rotation d'un angle fixe compris dans une plage allant de 360° à 720° après que le doigt est ajusté dans la came à gorge.

11. Le dispositif de pesage combiné (1) selon la revendication 9, dans lequel l'unité à vis (30) est solidarisée à l'organe d'entrainement en rotation (1002) lorsque l'unité à vis (30) est entrainée en rotation de 360° après que le doigt est ajusté dans la came à gorge.
